# EUROPÄISCHE PATENTSCHRIFT

(11) **EP 3 083 525 B1**
(45) Veröffentlichungstag und Bekanntmachung des Hinweises auf die Patenterteilung: **18.12.2019**
(21) Anmeldenummer: 14815757.1
(22) Anmeldetag: 19.12.2014
(51) Int. Cl.: C04B 40/00, C01F 7/74

(54) **VERFAHREN ZUR HERSTELLUNG EINES SPRITZBETONBESCHLEUNIGERS MIT NEUEN ROHSTOFFEN**
METHOD FOR PRODUCING A SHOTCRETE ACCELERATOR WITH NEW RAW MATERIALS
PROCÉDÉ DE FABRICATION D'UN ACCÉLÉRATEUR DE BÉTON PROJETÉ À L'AIDE DE NOUVELLES MATIÈRES PREMIÈRES

(30) Priorität: 20.12.2013 EP 13199157
(43) Veröffentlichungstag der Anmeldung: 26.10.2016
(60) Teilanmeldung: 19206783.3
(73) Patentinhaber: Sika Technology AG, 6340 Baar (CH)
(72) Erfinder: WEIBEL, Martin, CH-8048 Zürich (CH); LINDLAR, Benedikt, 78467 Konstanz (DE); STENGER, Christian, 5024 Küttigen (CH)
(74) Vertreter: Sika Patent Attorneys
(86) Internationale Anmeldenummer: PCT/EP2014/078841
(87) Internationale Veröffentlichungsnummer: WO 2015/092004

(56) Entgegenhaltungen:
- EP-A1- 0 069 718
- EP-A1- 0 069 719
- EP-A1- 1 878 713
- JP-A- 2000 226 213
- JP-A- 2000 313 647
- JP-A- 2007 031 166
- US-A- 2 332 285
- US-A- 3 226 188
- US-A- 4 877 597
- US-B1- 6 423 133
- SHIMATABI, H. ET AL: "Rapid setting agent for cement effective at low temperatures", CHEMICAL ABSTRACTS, Bd. 113, Nr. 14, 1. Oktober 1990 (1990-10-01), Seite 299, XP000190700, ISSN: 0009-2258
- BAI, Y. ET AL: "Setting accelerators for high-strength shotcrete", CHEMICAL ABSTRACTS, CHEMICAL ABSTRACTS SERVICE (C A S), US, Bd. 117, Nr. 8, 24. August 1992 (1992-08-24), Seite 347, XP000375883, ISSN: 0009-2258

## Beschreibung

### Technisches Gebiet

Die Erfindung betrifft ein Verfahren zur Herstellung eines Spritzbetonbeschleunigers mit neuen Rohstoffen, den daraus erhältlichen Spritzbetonbeschleuniger und dessen Verwendung.

### Stand der Technik

Es ist dem Fachmann gut bekannt, dass das Abbinden und Erhärten eines hydraulischen Bindemittels oder einer Mischung, welche ein hydraulisches Bindemittel enthält, durch die Zugabe eines Beschleunigers beschleunigt werden kann. Typische Beispiele für hydraulische Bindemittel sind Zement, wie Portlandzement, Portlandmischzemente, Kalk, gelöschte Kalke und Mischungen derselben, und typische Beispiele von Mischungen, welche ein solches hydraulisches Bindemittel und weitere Komponenten enthalten, sind Mörtel und Beton.

Spritzbeton oder -mörtel ist Beton oder Mörtel, der in einer geschlossenen Schlauch- oder Rohrleitung zur Einbaustelle gefördert und dort durch Spritzen aufgetragen und dabei verdichtet wird. Ein Spritzbeton oder Spritzmörtel muss schnell abbinden und erhärten, damit in der gespritzten Mischung sehr schnell eine ausreichende Festigkeit entwickelt wird, um sicherzustellen, dass die gespritzte Schicht richtig an der Oberfläche haftet, auf welche der Spritzbeton oder -mörtel aufgebracht wurde. Daher sind Beschleuniger für Spritzbeton und Spritzmörtel von besonderer Bedeutung.

Natriumaluminat ist ein großtechnisches Standardprodukt und wird als Beschleuniger für hydraulische Bindemittel verwendet. Üblicherweise sind größere Menge an Natriumaluminat erforderlich, was den Alkaligehalt des Betons deutlich erhöhen kann. In vielen Teilen der Welt ist dies nicht erwünscht, oder die zulässigen Höchstmengen sind gesetzlich beschränkt. Teilweise ist die Verwendung von alkalialuminatbasierten Beschleunigern wegen ihrem hohen pH-Wert (> 12) und somit wegen ihrem Gefährdungspotential für Augen, Haut und Lunge nicht mehr erlaubt.

Mischungen auf Basis von Aluminiumsulfat werden häufig als Beschleuniger eingesetzt, da sie das beste Preis-Leistungsverhältnis aufweisen. Sie sind aber in den ersten Minuten des Abbindens häufig zu langsam. Dieser Nachteil kann überwunden werden, indem man in der Mischung den Aluminiumgehalt erhöht bzw. das molare Verhältnis von Aluminium zu Sulfat auf größer als 2/3 (≈0,66) einstellt. In Aluminiumsulfat mit der Formel Al₂(SO₄)₃ ist das stöchiometrische molare Verhältnis von Al zu Sulfat 2 zu 3. Aluminiumsulfat kann durch Umsetzung von Aluminiumhydroxid und Schwefelsäure hergestellt werden.

Chemisch gesehen enthalten als Beschleuniger verwendete Mischungen mit einem molaren Verhältnis von Al / Sulfat von größer als 2/3 Aluminiumhydroxysulfat, das auch als basisches Aluminiumsulfat bezeichnet wird. Wässrige kommerzielle Mischungen mit einem molaren Verhältnis von Al zu Sulfat im Bereich von etwa 0,66 bis etwa 1 liegen gewöhnlich als Suspension, solche mit einem Verhältnis von größer 1 gewöhnlich als Lösung vor.

Beschleunigerzusammensetzungen auf Basis von Aluminiumsulfat sind aus EP 1878713 A1 und JP 2000 313647 A bekannt.

Zur Erhöhung des Aluminiumgehaltes in Aluminiumsulfat enthaltenden Mischungen haben sich als sulfatfreie oder sulfatarme Aluminiumquelle amorphe Aluminiumhydroxide, Aluminiumhydroxysulfate, Aluminiumhydroxycarbonate oder Aluminiumnitrat praktisch bewährt und können als Pulver oder Suspension zugesetzt werden. Kommerzielles amorphes Aluminiumhydroxysulfat weist gewöhnlich ein Verhältnis von Al:SO₄ von größer 1 oder sehr viel größer 1 auf und ist teuer. Andere bekannte Aluminiumquellen sind noch teurer, zu wenig reaktiv oder enthalten störende Komponenten.

### Darstellung der Erfindung

Die Aufgabe der vorliegenden Erfindung bestand daher darin, die vorstehend erwähnten Probleme nach dem Stand der Technik zu überwinden. Insbesondere bestand die Aufgabe in der Bereitstellung eines Verfahrens für die Herstellung von für Spritzbeton oder Spritzmörtel geeigneten, vorzugsweise basisches Aluminiumsulfat enthaltenden Beschleunigern, das verglichen mit dem Stand der Technik eine kostengünstigere Herstellung ermöglicht.

Dies konnte überraschenderweise durch Verwendung relativ preisgünstigere Rohstoffe zur Herstellung des Beschleunigers erreicht werden. Hierfür wurde der für eine schnelle Reaktion zugängliche Sulfatgehalt in Aluminiumsulfat und/oder ein Aluminiumhydroxysulfat enthaltenden Mischungen durch Zugabe von einer Calciumverbindung verringert.

Der für eine schnelle Reaktion zugängliche Sulfatgehalt ist von Bedeutung, da das Abbinden von Zement oder einem anderen hydraulischen Bindemittel beim Spritzen nur wenige Minuten dauert. Durch die bei der Zugabe der Calciumverbindung erfolgte Ausfällung von Gips wird dem Beschleuniger freies Sulfat entzogen. Dieses als Calciumsulfat gebundene Sulfat wird der unmittelbaren Abbindereaktion entzogen, was erwünscht ist, und erst verzögert nach Stunden, d.h. während der Erhärtung, durch Wiederauflösen des Gipses kontrolliert wieder freigesetzt. Auch dies ist in der Regel erwünscht. Ohne sich an eine Theorie binden zu wollen, wird vermutet, dass das dabei frei werdende Calcium die Erhärtung beschleunigt.

Die Erfindung betrifft daher Verfahren zur Herstellung eines Spritzbetonbeschleunigers aus einer Mischung a) umfassend das Mischen von
a) mindestens einer Aluminiumverbindung ausgewählt aus einem Aluminiumsulfat und/oder einem Aluminiumhydroxysulfat, mindestens einer Calciumverbindung und gegebenenfalls Wasser, wobei in der Mischung a) das molare Verhältnis Ca:Al im Bereich von 0,002 bis 0,5 liegt, wobei der Spritzbetonbeschleuniger oder, sofern es sich um einen festen Spritzbetonbeschleuniger handelt, eine Mischung des festen Spritzbetonbeschleunigers in Wasser einen pH-Wert von bevorzugt unter 4 aufweist.

Durch die Verwendung der preiswerten Rohstoffe können Mischungen auf Basis von Aluminiumsulfaten und/oder Aluminiumhydroxysulfaten mit einem erhöhten molaren Verhältnis von Aluminium zu Sulfat zu geringeren Kosten als bisher hergestellt werden, wobei für dieses molare Verhältnis nur leicht zugängliches Aluminium und Sulfat berücksichtigt werden, d.h. als ein CaSO₄ gebundenes Sulfat wird nicht berücksichtigt. Es gibt von CaSO₄ verschiedene

Hydrate, in der Regel fällt es in Form des Dihydrats aus. Diese Mischungen eignen sich als Spritzbetonbeschleuniger.

Durch die Verwendung der erfindungsgemäßen Mischungen als Spritzbetonbeschleuniger kann eine verbesserte Festigkeitsentwicklung des Spritzbetons erreicht werden. Desweiteren weist der Spritzbetonbeschleuniger eine verringerte Viskosität auf. Es wurde überraschenderweise festgestellt, dass die Zugabe der Calciumverbindung in der Mischung a) auch zu einer verbesserten Lagerstabilität des Spritzbetonbeschleunigers führt.

Bevorzugte Ausführungsformen des Verfahrens sind in den abhängigen Ansprüchen wiedergegeben. Die Erfindung betrifft auch den aus dem Verfahren erhältlichen Spritzbetonbeschleuniger sowie dessen Verwendung als Spritzbetonbeschleuniger. Im Folgenden wird die Erfindung im Einzelnen erläutert.

### Weg zur Ausführung der Erfindung

Beschleuniger sind Substanzen oder Mischungen, die das Abbinden und/oder Erhärten eines hydraulischen Bindemittels oder einer Mischung, welche ein hydraulisches Bindemittel enthält, beschleunigen. Typische Beispiele für hydraulische Bindemittel sind Zement, Kalk, gelöschte Kalke und Mischungen derselben, und typische Beispiele von Mischungen, welche ein solches Bindemittel und weitere Komponenten enthalten, sind Zementsuspensionen, z.B. für Injektionen, Mörtel und Beton. Bevorzugt handelt es sich um eine Zementsuspension, einen Beton oder Mörtel, der Zement, insbesondere Portlandzement und/oder Portlandmischzemente, enthält. Hydraulische Bindemittel, insbesondere Zemente, enthalten meist Calciumsulfat in Form von Gips, Hemihydrat und/oder Anhydrit als Abbinderegler bzw. Sulfatträger.

Spritzbeton wird allgemein als Oberbegriff für Spritzbeton und Spritzmörtel verwendet. Beschleuniger für Spritzbeton oder Spritzmörtel werden allgemein als Spritzbetonbeschleuniger bezeichnet. Sofern nicht ausdrücklich anders angegeben, schließt dementsprechend in der vorliegenden Anmeldung einschließlich der Ansprüche der Ausdruck Spritzbeton immer auch Spritzmörtel mit ein. Entsprechend umfasst der Ausdruck Spritzbetonbeschleuniger in der vorliegenden Anmeldung und in den beigefügten Ansprüchen Beschleuniger für Spritzbeton und Beschleuniger für Spritzmörtel sowie Beschleuniger für zementöse Injektionen.

Spritzbeton ist ein Beton oder Mörtel, der in einer geschlossenen Schlauch- oder Rohrleitung zur Einbaustelle gefördert und dort durch Spritzen aufgetragen und dabei verdichtet wird. Grundsätzlich werden zwei Spritzverfahren unterschieden, das Trocken- und das Nassspritzverfahren. Beim Trockenspritzverfahren wird ein erdfeuchter oder trockener Beton oder Mörtel der Förderleitung zugeführt und in der Regel mit Druckluft zur Spritzdüse gefördert. Dort werden Zugabewasser und gegebenenfalls Betonzusatzmittel wie z.B. Spritzbetonbeschleuniger oder Rückprallminderer zugegeben. Beim Nassspritzverfahren wird eine nasse Grundmischung aus einem Beton oder Mörtel über die Förderleitung zur Düse gefördert und in der Regel mittels Druckluft oder Treibluft gespritzt. Im Düsenbereich können gegebenenfalls Betonzusatzmittel wie z.B. Spritzbetonbeschleuniger zugegeben werden. Nassspritzverfahren können nach der Dünn-Strom-Methode oder der Dicht-Strom-Methode durchgeführt werden.

Spritzverfahren werden z.B. verwendet, wenn keine Verschalung möglich ist oder für die Bereitstellung von Auskleidungen und verstärkenden Schichten bei der Herstellung von Tiefbau-Konstruktionen oder wenn Hohlräume mit einer verstärkenden Schicht versehen werden müssen, z.B. in Tunneln, Galerien und Röhren, z.B. im Bergbau. Weiterhin kann das Spritzverfahren für die Verfestigung oder Stabilisierung oder Verdichtung von natürlichen Böden, wie Felsen, Abhängen oder Ausschachtungen, Baugrund und Untergrund dienen.

Gemäß dem erfindungsgemäßen Verfahren wird ein Spritzbetonbeschleuniger aus einer Mischung a) hergestellt. Das Verfahren zur Herstellung der jeweiligen Mischung a), die den Spritzbetonbeschleuniger darstellt, wird nachstehend ausführlich erläutert.

Der Spritzbetonbeschleuniger aus der Mischung a) kann als fester Spritzbetonbeschleuniger, d.h. als Feststoffmischung, vorzugsweise als Pulver vorliegen. Es ist aber bevorzugt, dass der nach dem erfindungsgemäßen Verfahren hergestellte Spritzbetonbeschleuniger aus der Mischung a) eine wässrige Mischung, insbesondere eine wässrige Lösung oder eine wässrige Suspension ist. Eine wässrige Suspension ist eine Dispersion von Feststoffteilchen in einer flüssigen Phase.

Ein fester Spritzbetonbeschleuniger kann ohne weiteres durch Zugabe von Wasser in eine wässrige Mischung, insbesondere eine wässrige Lösung oder Suspension des Spritzbetonbeschleunigers überführt werden. Es kann z.B. zweckmäßig sein, den Spritzbetonbeschleuniger in fester Form zum Einsatzort zu transportieren, um Volumen einzusparen, und ihn erst vor Ort in eine wässrige Lösung oder Suspension zu überführen, die dann als Spritzbetonbeschleuniger verwendet werden kann.

Der nach dem erfindungsgemäßen Verfahren hergestellte Spritzbetonbeschleuniger aus der Mischung a) kann für das Trockenspritzverfahren oder für das Nassspritzverfahren verwendet werden. Der Einsatz des Spritzbetonbeschleunigers in Form einer wässrigen Mischung, insbesondere einer wässrigen Lösung oder Suspension, ist bevorzugt.

Der Spritzbetonbeschleuniger gemäß Mischung a), der als wässrige Mischung, insbesondere als wässrige Lösung oder Suspension vorliegt, weist einen pH-Wert von unter 4 auf, z.B. einen pH im Bereich von 2 bis unter 4. Sofern es sich um einen festen Spritzbetonbeschleuniger handelt, weist eine Mischung des festen Spritzbetonbeschleunigers in Wasser ebenfalls einen pH-Wert von unter 4 auf z.B. einen pH im Bereich von 2 bis unter 4. Die Mischung des festen Spritzbetonbeschleunigers in Wasser kann z.B. erhalten werden, indem man 100 g des festen Spritzbetonbeschleunigers in 100 g Wasser löst oder suspendiert. Es kann einige Minuten oder Stunden dauern, bis sich ein Gleichgewicht und ein stabiler pH-Wert eingestellt haben. Die hier angegebenen pH-Werte beziehen sich alle wie üblich auf den pH-Wert der wässrigen Mischung im Gleichgewichtszustand.

Bei Zugabe von Wasser zur trockenen Mischung finden Lösungsvorgänge und andere Reaktionen statt, die z.B. zur Fällung fester Substanzen führen können. Je nach eingesetzten Rohstoffen kann es einige Minuten oder Stunden dauern, bis die Mischung abreagiert ist und sich das Gleichgewicht eingestellt hat. Im Verlauf der Abreaktion kann sich der pH-Wert verändern, so dass sich ein zeitlich konstanter pH-Wert erst nach Abreaktion einstellt. Die Gleichgewichtseinstellung lässt sich somit auch leicht dadurch feststellen, dass sich der pH-Wert im Wesentlichen nicht mehr ändert. Der pH-Wert wird bei Raumtemperatur (20°C) bestimmt.

Die wässrige Mischung der Mischung a), insbesondere als wässrige Lösung oder wässrige Suspension, kann z.B. einen Wassergehalt im Bereich von 20 bis 90 Gew.-%, insbesondere von 40 bis 80 Gew.-%, bevorzugt von 50 bis 70 Gew.-% und besonders bevorzugt von 60 bis 65 Gew.-% aufweisen. Der vorstehende Wassergehalt bezieht sich auf den Gesamtwassergehalt, d.h. einschließlich gegebenenfalls vorhandenen Kristallwassers. Einige Ausgangsstoffe, insbesondere Aluminiumsulfat, können Wasser, insbesondere in Form von Kristallwasser enthalten. Das Kristallwasser kann in einigen technischen Produkten sogar bis nahezu 50 Gew.-% des Gesamtgewichts ausmachen, was zu berücksichtigen ist. Der Feststoffgehalt ohne Kristallwasser des Spritzbetonbeschleunigers aus der Mischung a) beträgt besonders bevorzugt 30 bis 45 Gew.-% und insbesondere 35 bis 40 Gew.-%.

Es ist bevorzugt, das ein Spritzbetonbeschleuniger aus der Mischung a) frei von Chlorid oder im Wesentlichen frei von Chlorid ist, z.B. mit einem Chloridgehalt von nicht mehr als 0,1 Gew.-%, bezogen auf die Mischung a). Es ist ferner bevorzugt, dass der Spritzbetonbeschleuniger aus der Mischung a) frei von Alkali oder im Wesentlichen frei von Alkali ist, z.B. mit einem Alkaligehalt von nicht mehr als 1 Massen-% Na₂O-Äquivalent, bezogen auf die Mischung a). Es sind aber auch höhere Chlorid- und/oder Alkaligehalte möglich. Das Na₂O-Äquivalent wird weiter unten erläutert.

Ein Spritzbetonbeschleuniger aus der Mischung a) ist vorzugsweise eine wässrige Suspension, wobei die wässrige Suspension besonders bevorzugt Jurbanit enthält. Jurbanit ist Al(SO₄)(OH)·5 H₂O und liegt in der Suspension als Feststoff vor.

In den Mischungen a) liegt das molare Verhältnis von Aluminium zu (Sulfat-Calcium), d.h. mol_{Al}/(mol_{SO4} - mol_{Ca}), z.B. im Bereich von 0,66 bis 2,2 oder 2/3 bis 2,2, insbesondere größer 2/3, bevorzugt 0,67 bis 1,9, bevorzugter im Bereich von 0,68 bis 1,6, bevorzugter im Bereich von 0,69 bis 1,3, bevorzugter im Bereich von 0,7 bis 1, bevorzugter im Bereich von 0,71 bis 0,9 und besonders bevorzugt im Bereich von 0,72 bis 0,8. In einer Mischung a) ist zu berücksichtigen, dass das Sulfat teilweise als Calciumsulfat gebunden wird, wenn Wasser vorhanden ist. In wässriger Lösung fällt CaSO₄2H₂O ("Gips") aus. Die wässrigen Spritzbetonbeschleuniger aus den Mischungen a) enthalten bevorzugt Aluminiumhydroxysulfat in Lösung oder gefällt als Suspension, wobei das molare Verhältnis von Aluminium zu (Sulfat -Calcium) gemäß vorstehender Definition bevorzugt größer 2/3 und besonders bevorzugt größer 2/3 und nicht mehr als 1 ist.

Für das molare Verhältnis werden das gesamte Aluminium, Sulfat und Calcium in der Mischung berücksichtigt, egal in welcher Form sie vorliegen, z.B. in Lösung und/oder in gebundener Form als Feststoff. Calcium wird berücksichtigt, da Sulfat welches als schwerlösliches Calciumsulfat, gewöhnlich Gips, gebunden ist, für die Reaktion, durch die der Spritzbeton abgebunden wird, nicht zur Verfügung steht. Dieses Abbinden dauert in der Regel nur einige Minuten. Bei der anschließenden Aushärtung des Spritzbetons, die Stunden oder eventuell Tage dauern kann, stört der Gips nicht und kann sogar nützlich sein. In der Regel löst er sich dabei auf und wird in die Hydratphasen des Zements eingebaut.
Bei einer wässrigen Mischung a) kann in der Regel davon ausgegangen werden, dass, abgesehen von einer geringen Konzentration an Calciumionen in der Mischung unterhalb der Löslichkeitsgrenze von Calciumsulfat, der restliche Gehalt an Calcium aus der Calciumverbindung in Calciumsulfat überführt wird. Die Menge an Ca-Ionen, die aufgrund der Löslichkeitsgrenze von CaSO₄ in Lösung ist, ist wegen der relativen Schwerlöslichkeit von Calciumsulfat (Löslichkeitsprodukt bei 25°C gemäß R.C. Weast (Hrsg.), Handbook of Chemistry and Physics, 56. Auflage, CRC Press, Cleveland USA 1975: 2,45·10⁻⁵ mol²l⁻²) sehr gering.

Die Mengen an Calcium, Aluminium und Sulfat und das entsprechende molare Verhältnis mol_{Al}/(mol_{SO4}- mol_{Ca}), in den Mischungen a) können leicht aus den eingesetzten Mengen der Ausgangsverbindungen anhand ihrer Zusammensetzung ermittelt bzw. berechnet werden. Sofern erforderlich, kann gegebenenfalls der Gehalt der relevanten Elemente bzw. Ionen in den Ausgangskomponenten und/oder in der Mischung auch mittels bewährter Analysemethoden quantitativ bestimmt werden, wobei hier insbesondere ICP-OES (optische Emissionsspektroskopie mittels induktiv gekoppeltem Plasma) zu erwähnen ist. In der Regel ist Schwefel nur in Form von Sulfat enthalten, so dass aus der durch die Analyse ermittelten Menge an Schwefel auch direkt die Menge an Sulfat ermittelt werden kann. Sofern Schwefel auch in einer anderen Form als Sulfat vorhanden ist, was allerdings üblicherweise nicht der Fall ist, ist dies bei der Bestimmung des Sulfatgehalts gesondert zu berücksichtigen. Weitere Beispiele für übliche Analysemethoden, die gegebenenfalls eingesetzt werden können, sind z.B. Ionenchromatographie oder Elektrophorese für gelöste Ionen oder z.B. XRD (Röntgenbeugung) für kristalline Phasen.

Das Verfahren zur Herstellung der Mischung a) als Spritzbetonbeschleuniger umfasst das Mischen von mindestens einer Aluminiumverbindung ausgewählt aus einem Aluminiumsulfat und/oder einem Aluminiumhydroxysulfat, mindestens einer Calciumverbindung und gegebenenfalls Wasser. Bei der Aluminiumverbindung handelt es sich um ein Aluminiumsulfat und/oder ein Aluminiumhydroxysulfat, wobei ein Aluminiumsulfat bevorzugt ist. Es kann nur Aluminiumsulfat, nur Aluminiumhydroxysulfat oder Aluminiumsulfat und Aluminiumhydroxysulfat eingesetzt werden.

Als Aluminiumsulfat können alle üblichen Produkte eingesetzt werden, einschließlich technischen Aluminiumsulfats. Diese sind im Handel erhältlich. Es können wasserfreies Aluminiumsulfat, Aluminiumsulfathydrate oder Mischungen davon eingesetzt werden. In der Praxis werden Aluminiumsulfate mit unterschiedlichem Hydrat- bzw. Wassergehalt vertrieben, die für die vorliegende Erfindung geeignet sind. In der Regel sind Aluminiumsulfathydrate bevorzugt, da sie eine bessere Löslichkeit aufweisen. Technisches Aluminiumsulfat kann gegebenenfalls einen erhöhten Gehalt an Sulfat aufweisen, so dass das Verhältnis von Al/SO4 kleiner 2/3 ist. Dies kann sich z.B. dadurch ergeben, dass technisches Aluminiumsulfat häufig einen kleinen Überschuss (z.B. < 1%, meist nicht mehr als 0,3%) an Schwefelsäure enthält. Möglich ist auch eine zusätzliche Zugabe von Sulfatverbindungen wie Natriumsulfat oder weiterer Schwefelsäure z.B. in Mengen von bis zu 5 Gew.-% oder mehr, dies ist in der Regel aber nicht bevorzugt.

Geeignete Aluminiumhydroxysulfate sind stöchiometrische und nichtstöchiometrische Aluminiumhydroxysulfate, die jeweils wasserfrei oder als Hydrat vorliegen können. In den Aluminiumhydroxysulfaten ist ein Teil der Sulfationen in Aluminiumsulfat durch Hydroxygruppen ersetzt.

Aluminiumhydroxysulfate werden oft auch als basisches Aluminiumsulfat bezeichnet. Stöchiometrisches Aluminiumhydroxysulfat, Al(OH)(SO₄), das gegebenenfalls Hydratwasser aufweist, wird auch als Aluminiumhydroxidsulfat bezeichnet. Im stöchiometrischen Aluminiumhydroxysulfat ist das molare Verhältnis von Al/SO₄ gleich 1. Ein Beispiel hierfür ist Jurbanit. Nichtstöchiometrische Aluminiumhydroxysulfate weisen einen geringeren Gehalt an Hydroxid auf als das stöchiometrische Aluminiumhydroxysulfat. Für den Ladungsausgleich ist der Sulfatgehalt entsprechend erhöht. Dementsprechend ist das molare Verhältnis von Al/SO₄ in nicht-stöchiometrischen Aluminiumhydroxysulfaten kleiner 1 und größer als 2/3. Als nicht-stöchiometrisches Aluminiumhydroxysulfat kann z.B. das aus dem erfindungsgemäßen Verfahren aus Mischung c) erhaltene basische Aluminiumsulfat verwendet werden.

Als stöchiometrische oder nicht-stöchiometrische Aluminiumhydroxysulfate können wasserfreie Aluminiumhydroxysulfate, Aluminiumhydroxysulfathydrate oder Mischungen davon eingesetzt werden.

Als Calciumverbindung können eine oder mehrere übliche Calciumverbindungen verwendet werden. Es kann sich um anorganische oder organische Calciumverbindungen handeln, wobei anorganische Calciumverbindungen bevorzugt sind. Ohne sich an eine Theorie binden zu wollen, dient die Calciumverbindung gewöhnlich als Quelle von Calciumionen zum Abfangen von Sulfat in der Mischung unter Bildung von schwerlöslichem Calciumsulfat.

Bei der eingesetzten Calciumverbindung kann es sich um eine zumindest im sauren pH-Bereich ganz oder teilweise wasserlösliche künstliche oder natürliche (z. B. Mineral) Verbindung handeln.

In einer bevorzugten Variante wird die Calciumverbindung in einer solchen Menge eingesetzt, dass die Calciumkonzentration im Beschleuniger nur knapp über oder sogar unter der Löslichkeitsgrenze von Gips liegt. Ohne sich an eine Theorie binden zu wollen, wird vermutet, dass Mischungen von Beton und solchen Beschleunigern bezüglich Ca von Anfang an gesättigt sind und deshalb schneller abbinden.

Überraschenderweise wurde festgestellt, dass auch geringe, sich noch in Lösung befindliche Mengen Ca-Ionen oder Ca-haltige Kristallkeime wirksam sind und auch die Lagerstabilität verbessern. Daher kann die Calciumverbindung auch in geringen Mengen unterhalb der Löslichkeitsgrenze von Gips in der Mischung zugegeben werden. In diesem Fall fällt kein Gips aus und das molare Verhältnis von Al zu Sulfat in der Lösung bleibt unverändert.

Bei der mindestens einen Calciumverbindung handelt es sich bevorzugt um eine Calciumverbindung, die bei einem pH < 7, d.h. im sauren Bereich, in Wasser löslich ist, was auch eine Reaktion beinhalten kann. Calciumsulfat ist daher z.B. nicht bevorzugt.

Beispiele für bevorzugte Calciumverbindungen sind Calciumoxid, Calciumhydroxid, Calciumcarbonat, Zement, insbesondere Portlandzement, und Mischungen davon. Des weiteren sind Calciumhalogenide wie Calciumchlorid und Calciumnitrat ebenfalls geeignet, aber nicht bevorzugt, da Halogenide wie Chlorid oder Nitrat in zu großen Konzentrationen bestimmte Eigenschaften des Betons oder Mörtels negativ beeinflussen können und deren Gehalt in den meisten Ländern für viele Anwendungen beschränkt ist. Insbesondere der Einsatz von Calciumnitrat kann aber unter bestimmten Umständen durchaus zweckmäßig sein. Weitere Beispiele für geeignete Calciumverbindungen sind Calciumformiat und Calciumacetat. In einer Ausführungsform kann als Calciumverbindung eine Mischung von einer basischen Calciumverbindung und Calciumcarbonat eingesetzt werden. Beispiele für basische Calciumverbindungen sind Calciumoxid, Calciumhydroxid oder Zement.

Bevorzugte Beispiele für den Zement sind z. B. ein Zement gemäss Norm EN 197 CEM I, CEM II, CEM III, CEM IV oder CEM V, oder gemäss Norm ASTM C150 Type I, Type II, Type III, Type IV oder Type V.

Es ist im Allgemeinen bevorzugt, dass die zugesetzte Calciumverbindung im Wesentlichen vollständig unter Bildung von Calciumsulfat abreagiert. In einigen Fällen kann es aber auch vorteilhaft sein, dass die Calciumverbindung nicht vollständig reagiert und Reste oder inerte Anteile verbleiben.

Durch die Zugabe der Calciumverbindung zu einem Aluminiumsulfat und/oder einem Aluminiumhydroxysulfat in wässriger Mischung kann durch Ausfällen von Calciumsulfat (Gips) ein Teil des vorhandenen Sulfats gebunden und so das Verhältnis von Aluminium zu leicht zugänglichem Sulfat im Beschleuniger erhöht werden. Bei der Reaktion von einem Aluminiumsulfat und/oder einem Aluminiumhydroxysulfat mit Calciumcarbonat wird ferner Kohlendioxid freigesetzt. Durch die Zugabe von Zement, insbesondere Portlandzement, wird nicht nur Gips abgeschieden, sondern der Mischung wird auch in dem Zement enthaltenes Aluminium zugesetzt. Auch andere im Zement enthaltene Substanzen wie Eisen oder Silikat können nützlich sein.

Der Mischung kann gegebenenfalls Wasser zugegeben werden. Die Zugabe von Wasser ist besonders bevorzugt. Es kann Wasser allein oder Wasser, das ein oder mehrere Additive enthält, verwendet werden. Beispiele für geeignete Additive sind die nachstehend genannten. In dem Wasser kann z.B. mindestens ein Stabilisator, insbesondere ein Stabilisator für die Lagerstabilität, enthalten sein. Es kann sich um einen löslichen Stabilisator, wie Phosphorsäure, oder bevorzugt um einen unlöslichen Stabilisator, wie z.B. Sepiolit oder Bentonit, handeln.

Der Mischung können ferner nach Bedarf ein oder mehrere Additive zugesetzt werden. Es kann sich um übliche Additive handeln, die in Spritzbetonbeschleuniger eingesetzt werden. Beispiele für solche Additive sind eine oder mehrere Aluminiumverbindungen, insbesondere sulfatfreie oder sulfatarme Aluminiumverbindungen, um den Aluminiumgehalt weiter zu erhöhen, ein oder mehrere Dispergiermittel, ein oder mehrere Additive, die das Abbindeverhalten verbessern, und/oder ein oder mehrere Stabilisatoren. Beispiele für Stabilisatoren sind vorstehend angegeben. Beispiele für bevorzugt eingesetzte Additive, die in geeigneter Menge das Abbindeverhalten verbessern, sind Mg²⁺-Verbindungen oder Magnesiumsalze, wie Magnesiumoxid, - hydroxid oder -carbonat, Diethanolamin (DEA) und Fluorverbindungen wie Flusssäure, Alkalifluoride und Fluorokomplexe. Sie können im Beschleuniger das Abbinden und teilweise auch die Lagerstabilität verbessern.

Ferner kann der Mischung a) auch mindestens ein Alkalialuminat als Additiv zugegeben werden. Als Beispiele für geeignete Alkalialuminate wird auf die nachstehend genannten Beispiele verwiesen. Bei dem Alkalialuminat handelt es sich bevorzugt um ein Natriumaluminat, ein Kaliumaluminat oder eine Mischung davon. Wenn mindestens ein Alkalialuminat zugegeben wird, beträgt der Alkaligehalt der Mischung a) z.B. nicht mehr als 10 Massen-%, bevorzugt nicht mehr als 5 Massen-%, bevorzugt nicht mehr als 2 Massen-%, bevorzugter nicht mehr als 1 Massen-% Na₂O-Äquivalent. Diese bevorzugten Bereiche für den Alkaligehalt gelten im Übrigen auch, wenn der Mischung a) kein Alkalialuminat zugegeben wird.

Beispiele für sulfatfreie oder sulfatarme Aluminiumverbindungen sind amorphe Aluminiumhydroxide, Aluminiumnitrat oder Aluminiumhydroxycarbonate. Beispiele für Dispergiermittel sind Polyacrylsäure, Polyacrylate, Derivate von Phosphonsäuren und Mischungen, enthaltend zwei oder mehr der genannten Komponenten.

Das Verhältnis von Aluminiumsulfat und/oder Aluminiumhydroxysulfat und der mindestens einen Calciumverbindung ist in der Mischung a) das molare Verhältnis Ca : Al und liegt im Bereich von 0,002 bis 0,5.

Zur Herstellung der Mischung a) können z.B., bezogen auf das Gesamtgewicht der Ausgangskomponenten einschließlich gegebenenfalls darin enthaltenen Kristallwassers aber ohne gegebenenfalls zugegebenem flüssigem Wasser, 50 bis 99,95 Gew.-% und bevorzugt 80 bis 99,5 Gew.-% Aluminiumsulfat und/oder Aluminiumhydroxysulfat und 0,05 bis 50 Gew.-%, bevorzugt 0,2 bis 20 Gew.-%, bevorzugter 0,5 bis 10 Gew.-%, und besonders bevorzugt 1 bis 5 Gew.-% mindestens einer Calciumverbindung zugesetzt werden, wobei gegebenenfalls auch ein oder mehrere Additive zugesetzt werden können, z.B. in einem Anteil von 0 bis 50 Gew.-%, bevorzugt 0,01 bis 20 Gew.-%, bevorzugter von 0,5 bis 10 Gew.-%.

Die Mischung a) kann als Feststoff, insbesondere als Pulver, oder bevorzugt als wässrige Mischung, insbesondere als wässrige Lösung oder wässrige Suspension, vorliegen. Der Wassergehalt der wässrigen Mischung a) kann z.B. im Bereich von 20 bis 90 Gew.-%, insbesondere 40 bis 80 Gew.-%, bevorzugt von 50 bis 70 Gew.-% und besonders bevorzugt 60 bis 65 Gew.-% liegen. Der vorstehende Wassergehalt bezieht sich auf den Gesamtwassergehalt, d.h. einschließlich gegebenenfalls vorhandenen Kristallwassers.

Die Reihenfolge der Zugabe der einzelnen Komponenten zur Mischung ist beliebig. Zur Herstellung einer trockenen Mischung können die Ausgangskomponenten einfach in trockener Form vermischt werden und gegebenenfalls weitere Additive zugesetzt werden. In einer bevorzugten Ausführungsform wird das Aluminiumsulfat und/oder Aluminiumhydroxysulfat in Wasser gelöst und/oder suspendiert und die mindestens eine Calciumverbindung anschließend in fester Form zugegeben und verrührt. Diese Ausführungsform kann allerdings bei basischen Calciumverbindungen gegebenenfalls zu einer Klumpenbildung führen. Um dies zu vermeiden, kann man beim Einsatz von basischen Calciumverbindungen wie z.B. Ca(OH)₂ oder Zement, wie Tonerdezement, dieses basische Pulver mit Kalk (CaCO₃) mischen. Bei Auflösung dieser Mischung entsteht Gas (CO₂), welches der Klumpenbildung entgegenwirkt.

In einer weiteren Ausführungsform wird die Calciumverbindung zuerst in Wasser gelöst und/oder suspendiert und anschließend Aluminiumsulfat und/oder Aluminiumhydroxysulfat als Pulver oder als wässrige Lösung oder Suspension beigegeben oder die in Wasser gelöste und/oder suspendierte Calciumverbindung wird zum Aluminiumsulfat und/oder Aluminiumhydroxysulfat als Pulver, Suspension oder Lösung gegeben.

In einer besonders bevorzugten Ausführungsform werden festes Aluminiumsulfat und/oder Aluminiumhydroxysulfat und die mindestens eine Calciumverbindung in fester Form vermischt und die erhaltene Feststoffmischung zu Wasser, das zweckmäßigerweise stark gerührt wird, zugegeben. Bei den bevorzugten Ausführungsformen können optionale Additive in beliebiger Weise zugesetzt werden, z.B. als gesonderte Komponente oder als Bestandteil des vorgelegten Wassers.

Die Mischung der Komponenten kann mit üblichen Misch- und/oder Rührvorrichtungen oder auch manuell mit geeigneten Misch- und/oder Rührmitteln für Trockenmischungen oder wässrige Mischungen erfolgen. Auf diese Weise kann eine homogene Mischung der Komponenten erhalten werden.

Bei der Mischung von Aluminiumsulfat und/oder Aluminiumhydroxysulfat und der mindestens einen Calciumverbindung in Wasser findet in der Regel eine exotherme Reaktion statt. Die Mischung kann gegebenenfalls erwärmt werden, das ist aber in der Regel nur dann erforderlich, wenn sonst die Auflösung oder Reaktion der Rohstoffe zu langsam ist. In der Regel brauchen die Komponenten nur kurz vermischt zu werden. Insbesondere wenn wie bevorzugt auch Wasser zur Mischung gegeben wird, kann das Mischen und gegebenenfalls Nachrühren z.B. über einen Zeitraum von 10 min bis 48 h, bevorzugt 10 min bis 24 h, oder 6 h bis 48 h erfolgen, um den fertigen Spritzbetonbeschleuniger zu erhalten.

Das in der Mischung gebildete Calciumsulfat kann zumindest zum Teil abgetrennt werden, z.B. durch Filtration. Es kann aber zweckmäßig sein, es in der Mischung zu belassen, da es gegebenenfalls eine zusätzliche Beschleunigung des Abbindens und Erhärtens des Betons oder Mörtels bewirken kann. Gegebenenfalls kann auch ein Teil oder die Gesamtmenge an zugegebenem Wasser wieder entfernt werden, z.B. durch Abdampfen, dies ist aber in der Regel nicht bevorzugt.

Der Alkaligehalt wird wie in der Zementindustrie allgemein üblich als Na₂O-Äquivalent ausgedrückt, der nach folgender Formel berechnet wird (Angaben in Massen-%):

Na₂O-Äquivalent=Na₂O+0,658·K₂O

Wie aus der Formel ersichtlich, bezieht sich der Alkaligehalt nur auf Na und K.

Als Alkalialuminat können z.B. Lithiumaluminate, Natriumaluminate, Kaliumaluminate oder eine Mischung von zwei oder mehr davon eingesetzt werden, wobei Natriumaluminat und Kaliumaluminat und Mischungen davon bevorzugt sind und Natriumaluminat besonders bevorzugt ist, wobei die genannten Aluminate auch in Form ihrer Hydrate vorliegen können. Die Alkalialuminate sind im Handel erhältlich. Natriumaluminat ist ein großtechnisches Produkt. Die meisten kommerziellen Alkalialuminate mit oder ohne Hydratwasser sind nicht stöchiometrisch, beispielsweise werden Kaliumaluminate mit einer Stöchiometrie von 1,4 K₂O + 1 Al₂O₃ vertrieben. Bei den Alkalialuminaten kann es sich daher neben den stöchiometrischen auch um nichtstöchiometrische Alkalialuminate handeln, wie sie im Handel üblich sind. Falls für die gewünschte Verfahrensführung geeignet, können mit Vorteil auch direkt die wässrigen Lösungen oder Suspensionen dieser Alkalialuminate eingesetzt werden, wie z.B. handelsübliche Natriumaluminat-Lösungen. Durch die Zugabe eines Alkalialuminats wird der Aluminiumgehalt der Mischung erhöht.

Wenn als Calciumverbindung Tonerdezement eingesetzt wird, ist die Herstellung der Mischung a) schwierig, da aufgrund der hohen Reaktivität von Tonerdezement die Mischung vor der Abreaktion häufig verklumpt. Diese Probleme können aber vermieden werden, wenn eine von zwei oder beide bereits vorstehend ausgeführten speziellen Verfahrensführungen gewählt werden, bei der die Ausgangskomponenten zuerst trocken vermischt und anschließend die Trockenmischung und Wasser gemischt werden.

Dabei können die Ausgangskomponenten zuerst trocken vermischt werden und anschließend wird die Trockenmischung zu Wasser gegeben. Die Trockenmischung wird dabei vorzugsweise allmählich in das Wasser eingerührt.

Alternativ kann Tonerdezement als basische Komponente (Pulver) allein oder ein Pulvergemisch, welches Tonerdezement enthält, vor der Zugabe zum Wasser oder der wässrigen Lösung mit Calciumcarbonat versetzt werden. Das in saurem Medium (pH 2 bis unter 4) freigesetzte CO₂-Gas wirkt der Verklumpung entgegen und kann die Verklumpung verhindern.

Dementsprechend betrifft die Erfindung auch ein Verfahren zur Herstellung eines Spritzbetonbeschleunigers, umfassend das Mischen von mindestens einer Aluminiumverbindung ausgewählt aus einem Aluminiumsulfat und einem Aluminiumhydroxysulfat und Tonerdezement und gegebenenfalls Calciumcarbonat in fester Form, um eine Feststoffmischung zu erhalten, und die Zugabe der Feststoffmischung zu Wasser, das gegebenenfalls gelöstes und/oder dispergiertes Calciumcarbonat enthält, um eine wässrige Mischung, insbesondere eine wässrige Lösung oder Suspension zu erhalten, wobei der Spritzbetonbeschleuniger einen pH-Wert von unter 4 aufweist.

Als Aluminiumsulfat und/oder Aluminiumhydroxysulfat kommen alle üblichen Produkte in Betracht, die auch für die Mischung a) eingesetzt werden können. Es wird daher auf die obigen Angaben verwiesen. Als Tonerdezement eignen sich alle in Handel erhältlichen Tonerdezemente. Alle vorstehend und nachstehend gemachten Angaben zur Mischung a) gelten gleichermaßen für dieses Verfahren, außer dass die in der Mischung a) eingesetzte mindestens eine Calciumverbindung durch Tonerdezement zu ersetzen ist und das obige Verfahren eingesetzt wird. Es wird daher auf diese Angaben verwiesen.

Die Erfindung betrifft auch die nach den vorstehend beschriebenen Verfahren erhältlichen Spritzbetonbeschleuniger aus einer Mischung a).

Die Erfindung betrifft auch die Verwendung einer Mischung a) als Beschleuniger für Spritzbeton oder Spritzmörtel bzw. als Spritzbetonbeschleuniger. Durch den Spritzbetonbeschleuniger kann das Abbinden und/oder Erhärten des Spritzbetons oder Spritzmörtels beschleunigt werden. Der Spritzbetonbeschleuniger ist dabei für die vorstehend beschriebenen Trockenspritzverfahren und Nassspritzverfahren geeignet, wobei er besonders bevorzugt im Nassspritzverfahren eingesetzt wird.

Der Spritzbetonbeschleuniger aus der Mischung a) kann als Pulver oder wässrige Mischung, insbesondere als wässrige Lösung oder Suspension, zum Spritzbeton oder Spritzmörtel zugesetzt werden, wobei der Spritzbetonbeschleuniger bevorzugt als wässrige Lösung oder Suspension eingesetzt wird, insbesondere beim Nassspritzverfahren. Wie vorstehend erwähnt, kann die wässrige Mischung auch erst am Einsatzort aus dem festen Spritzbetonbeschleuniger durch Zugabe von Wasser und gegebenenfalls weiteren Additiven, wie z. B. Diethanolamin, fertiggestellt werden. Kommerzielles DEA enthält meistens 10 - 20 % Wasser und kann so verwendet werden.

Beim Trockenspritzverfahren wird der erfindungsgemäße Spritzbetonbeschleuniger dem trockenen oder feuchten Spritzbeton oder Spritzmörtel vor oder gleichzeitig mit der Zugabe des Zugabewassers zugesetzt. Beim Nassspritzverfahren wird der erfindungsgemäße Spritzbetonbeschleuniger der nassen Grundmischung aus Beton oder Mörtel und Zugabewasser zugesetzt.

Der erfindungsgemäße Spritzbetonbeschleuniger kann der zu spritzenden Mischung, d.h. dem trockenen oder feuchten Spritzbeton oder -mörtel oder der nassen Grundmischung, in jeder Stufe des Spritzvorgangs zugegeben werden, z.B. in der Pumpe, die die Mischung transportiert, in der Linie, in der die Mischung transportiert wird, in der Vorbenetzungsdüse oder in der Spritzdüse oder zusammen mit der für das Spritzen verwendeten Luft oder zusammen mit dem Wasser, das bei der Durchführung eines Trockenspritzverfahrens in der Spritzdüse zugegeben wird. Der erfindungsgemäße Spritzbetonbeschleuniger wird bevorzugt in der Spritzdüse zugesetzt, insbesondere beim Nassspritzverfahren.

Die Zugabe des erfindungsgemäßen Spritzbetonbeschleunigers erfolgt vorzugsweise unter Verwendung einer Dosiereinheit, die für das Einbringen einer vorbestimmten Menge geeignet ist. Der erfindungsgemäße Spritzbetonbeschleuniger kann z.B. in einer Menge von 0,1 bis 15 Gew.-%, bevorzugt 2 bis 8 Gew.-%, bezogen auf die Menge an hydraulischem Bindemittel in der Zementsuspension, im Spritzbeton oder Spritzmörtel, zugegeben werden.

### Beispiele

Es wurden Beschleuniger gemäß der folgenden Formulierung hergestellt:

| | |
|---|---|
| Aluminiumsulfat (Al₂(SO₄)₃ mit 17 % Al₂O₃) | 58 Gew.-% |
| Wasser | 39 Gew.-% |
| Sepiolith (Stabilisator) | 1 Gew.-% |
| Calciumverbindung | 2 Gew.-% |

Als einzusetzende Calciumverbindung eignen sich z.B.:

| | |
|---|---|
| Calciumoxid | z. B. CaO, gebrannter Kalk usw. |
| Calciumhydroxid | z. B. Ca(OH)₂, gelöschter Kalk usw. |
| Calciumcarbonat | z. B. CaCO₃, Kalkstein, Marmor, Dolomit usw. (in gemahlener Form) |
| Calciumnitrat | z. B. Ca(NO₃)₂, Ca(NO₃)₂ · 4 H₂O usw. |
| Calciumchlorid | z. B. CaCl₂ · 2 H₂O, CaCl₂ · 4 H₂O, CaCl₂ · 6 H₂O usw |
| Calciumformiat | z. B. Ca(CHO₂)₂, |
| Calciumacetat | z. B. Ca(C₂H₃O₂)₂, Calciumacetat Hydrat, usw. |

Dem Beschleuniger kann gegebenenfalls ferner mindestens ein Additiv, z.B. eines, welches vorstehend in der Beschreibung angeführt ist, zugesetzt werden, wobei dann in der Regel der Wassergehalt oder der Aluminiumsulfatgehalt entsprechend reduziert wird. Es kann z.B. zur oben genannten Mischung 1 Gew.-% an einem oder mehreren Additiven zugesetzt werden, wobei der Wassergehalt dementsprechend auf 38 Gew.-% reduziert wird.

## Patentansprüche

1. Verfahren zur Herstellung eines Spritzbetonbeschleunigers aus einer Mischung a), umfassend das Mischen von
a) mindestens einer Aluminiumverbindung ausgewählt aus einem Aluminiumsulfat und/oder einem Aluminiumhydroxysulfat, mindestens einer Calciumverbindung und gegebenenfalls Wasser,
wobei in der Mischung a) das molare Verhältnis Ca : Al im Bereich von 0,002 bis 0,5 liegt und der Spritzbetonbeschleuniger oder, sofern es sich um einen festen Spritzbetonbeschleuniger handelt, eine Mischung des festen Spritzbetonbeschleunigers in Wasser, einen pH-Wert von unter 4 aufweist.

2. Verfahren nach Anspruch 1, wobei die mindestens eine Calciumverbindung der Mischung a) mindestens eine Calciumverbindung ausgewählt aus Calciumoxid, Calciumhydroxid, Calciumcarbonat, Calciumnitrat und Zement, insbesondere Portlandzement und/oder Portlandmischzement, ist, und/oder nicht Tonerdezement ist.

3. Verfahren nach Anspruch 1 oder Anspruch 2, wobei in der Mischung a) das molare Verhältnis Ca : Al im Bereich von 0,01 bis 0,5 und bevorzugt von 0,05 bis 0,5 liegt.

4. Verfahren nach irgendeinem der Ansprüche 1 bis 3, wobei bei der Mischung a)
die mindestens eine Aluminiumverbindung ausgewählt aus Aluminiumsulfat und Aluminiumhydroxysulfat in Wasser gelöst und/oder suspendiert wird und die mindestens eine Calciumverbindung in fester Form zugegeben wird oder
die mindestens eine Aluminiumverbindung ausgewählt aus Aluminiumsulfat und Aluminiumhydroxysulfat und die mindestens eine Calciumverbindung, bevorzugt eine basische Calciumverbindung, in fester Form vermischt werden und die erhaltene Feststoffmischung zu Wasser gegeben wird oder
die mindestens eine Aluminiumverbindung ausgewählt aus Aluminiumsulfat und Aluminiumhydroxysulfat und mindestens eine basische Calciumverbindung und gegebenenfalls Calciumcarbonat in fester Form vermischt werden, und die erhaltene Feststoffmischung zu Wasser, das gegebenenfalls gelöstes und/oder suspendiertes Calciumcarbonat enthält, gegeben wird, wobei mindestens in einer Komponente ausgewählt aus der Feststoffmischung und dem Wasser Calciumcarbonat enthalten ist, oder
die Calciumverbindung zuerst in Wasser gelöst und/oder suspendiert wird und anschließend Aluminiumsulfat und/oder Aluminiumhydroxysulfat als Pulver oder als wässrige Lösung oder Suspension beigegeben wird.

5. Verfahren nach einem der Ansprüche 1 bis 4, wobei zumindest ein Teil des sich in der Mischung a) gebildeten Calciumsulfats abgetrennt wird und/oder in der Mischung a) zumindest ein Teil des zugegebenen Wassers wieder entfernt wird.

6. Verfahren nach irgendeinem der Ansprüche 1 bis 5, wobei der Spritzbetonbeschleuniger oder, sofern es sich um einen festen Spritzbetonbeschleuniger handelt, eine Mischung des festen Spritzbetonbeschleunigers in Wasser einen pH-Wert im Bereich von 2 bis unter 4 aufweist.

7. Verfahren nach irgendeinem der Ansprüche 1 bis 6, wobei der Spritzbetonbeschleuniger als Pulver, wässrige Lösung oder wässrige Suspension vorliegt, wobei eine wässrige Lösung oder Suspension bevorzugt ist.

8. Verfahren nach Anspruch 7, wobei der Spritzbetonbeschleuniger eine wässrige Suspension ist, die Jurbanit enthält.

9. Verfahren nach irgendeinem der Ansprüche 1 bis 8, wobei das molare Verhältnis von Aluminium zu (Sulfat - Calcium), mol_{Al}/(mol_{SO4} - mol_{Ca}), in der Mischung a) im Bereich von 0,66 bis 2,2 oder 2/3 bis 2,2, insbesondere größer 2/3, bevorzugt im Bereich von 0,67 bis 1,9, bevorzugter von 0,68 bis 1,6, noch mehr bevorzugt von 0,69 bis 1,3, noch mehr bevorzugt von 0,7 bis 1, noch mehr bevorzugt von 0,71 bis 0,9 und besonders bevorzugt im Bereich von 0,72 bis 0,8 liegt.

10. Verfahren nach irgendeinem der Ansprüche 1 bis 9, wobei zur Mischung a) ferner ein oder mehrere Additive zugesetzt werden, wobei ein Additiv z.B. mindestens ein Alkalialuminat sein kann.

11. Verfahren nach irgendeinem der Ansprüche 1 bis 10, wobei, bezogen auf das Gesamtgewicht der Ausgangskomponenten einschließlich gegebenenfalls darin enthaltenen Kristallwassers aber ohne gegebenenfalls zugegebenem Wasser,
bei der Herstellung der Mischung a) von 50 bis 99,95 Gew.-%, bevorzugt 80 bis 99,5 Gew.-% Aluminiumsulfat und/oder Aluminiumhydroxysulfat und 0,05 bis 50 Gew.-%, bevorzugt 0,2 bis 20 Gew.-%, mindestens einer Calciumverbindung zugesetzt werden, wobei der Mischung a) ferner ein oder mehrere Additive zugesetzt werden können.

12. Spritzbetonbeschleuniger erhältlich nach einem Verfahren gemäss irgendeinem der Ansprüche 1 bis 11 aus einer Mischung a) enthaltend mindestens einer Aluminiumverbindung ausgewählt aus einem Aluminiumsulfat und/oder einem Aluminiumhydroxysulfat, mindestens einer Calciumverbindung und gegebenenfalls Wasser, wobei das molare Verhältnis Ca : Al im Bereich von 0,002 bis 0,5 liegt und der Spritzbetonbeschleuniger oder, sofern es sich um einen festen Spritzbetonbeschleuniger handelt, eine Mischung des festen Spritzbetonbeschleunigers in Wasser, einen pH-Wert von unter 4 aufweist..

13. Verwendung eines Spritzbetonbeschleunigers nach Anspruch 12 als Beschleuniger für Zementsuspensionen, Spritzbeton oder Spritzmörtel, insbesondere als Beschleuniger im Nassspritzverfahren.

14. Verfahren zur Herstellung eines Spritzbetonbeschleunigers nach irgendeinem der Ansprüche 1 bis 11, umfassend das Mischen von mindestens einer Aluminiumverbindung ausgewählt aus einem Aluminiumsulfat und/oder einem Aluminiumhydroxysulfat und Tonerdezement und gegebenenfalls Calciumcarbonat in fester Form, um eine Feststoffmischung zu erhalten, und die Zugabe der Feststoffmischung zu Wasser, das gegebenenfalls gelöstes und/oder dispergiertes Calciumcarbonat enthält, um eine wässrige Mischung, insbesondere eine wässrige Lösung oder Suspension zu erhalten.

## Claims

1. Method for producing a sprayed-concrete accelerator from a mixture a), comprising the mixing of
a) at least one aluminium compound selected from an aluminium sulfate and/or an aluminium hydroxysulfate, at least one calcium compound, and optionally water,
where, in the mixture a), the molar ratio Ca:Al is in the range from 0.002 to 0.5 and the sprayed-concrete accelerator or, where it is a solid sprayed-concrete accelerator, a mixture of the solid sprayed-concrete accelerator in water has a pH of below 4.

2. Method according to Claim 1, the at least one calcium compound of the mixture a) being at least one calcium compound selected from calcium oxide, calcium hydroxide, calcium carbonate, calcium nitrate, and cement, more particularly Portland cement and/or blended Portland cement, and/or not being aluminous cement.

3. Method according to Claim 1 or Claim 2, where,
in the mixture a), the molar ratio Ca:Al is in the range from 0.01 to 0.5 and preferably from 0.05 to 0.5.

4. Method according to any one of Claims 1 to 3, where
for the mixture a)
the at least one aluminium compound selected from aluminium sulfate and aluminium hydroxysulfate is dissolved and/or suspended in water and the at least one calcium compound is added in solid form, or
the at least one aluminium compound selected from aluminium sulfate and aluminium hydroxysulfate and the at least one calcium compound, preferably a basic calcium compound, are mixed in solid form and the resulting solids mixture is added to water, or
the at least one aluminium compound selected from aluminium sulfate and aluminium hydroxysulfate and at least one basic calcium compound and optionally calcium carbonate are mixed in solid form, and the resulting solids mixture is added to water which optionally contains dissolved and/or suspended calcium carbonate, with calcium carbonate being present at least in one component selected from the solids mixture and the water, or
the calcium compound is first dissolved and/or suspended in water and then aluminium sulfate and/or aluminium hydroxysulfate are admixed as powder or as aqueous solution or suspension.

5. Method according to any of Claims 1 to 4, at least a portion of the calcium sulfate formed in the mixture a) being separated off and/or, in the mixture a), at least a portion of the added water being removed again.

6. Method according to any one of Claims 1 to 5, the sprayed-concrete accelerator or, where it is a solid sprayed-concrete accelerator, a mixture of the solid sprayed-concrete accelerator in water having a pH in the range from 2 to below 4.

7. Method according to any one of Claims 1 to 6, the sprayed-concrete accelerator being present as powder, aqueous solution or aqueous suspension, preference being given to an aqueous solution or suspension.

8. Method according to Claim 7, the sprayed-concrete accelerator being an aqueous suspension which comprises jurbanite.

9. Method according to any one of Claims 1 to 8, the molar ratio of aluminium to (sulfate - calcium), mol_{Al}/(mol_{SO4} - mol_{Ca}), in the mixture a) being in the range from 0.66 to 2.2 or 2/3 to 2.2, more particularly greater than 2/3, preferably in the range from 0.67 to 1.9, more preferably from 0.68 to 1.6, still more preferably from 0.69 to 1.3, still more preferably from 0.7 to 1, still more preferably from 0.71 to 0.9, and very preferably in the range from 0.72 to 0.8.

10. Method according to any one of Claims 1 to 9, where
to the mixture a), further, one or more additives are added, wherein an additive may be, for example, at least one alkali metal aluminate.

11. Method according to any one of Claims 1 to 10, where, based on the total weight of the starting components, including any water of crystallization, if present therein but without any water optionally added,
in the preparation of the mixture a), from 50 to 99.95 wt%, preferably 80 to 99.5 wt%, of aluminium sulfate and/or aluminium hydroxysulfate and 0.05 to 50 wt%, preferably 0.2 to 20 wt%, of at least one calcium compound are added,
wherein, further, one or more additives may be added to the mixture a).

12. Sprayed-concrete accelerator obtainable by a method according to any one of Claims 1 to 11 of a mixture a) comprising at least one aluminium compound selected from an aluminium sulfate and/or an aluminium hydroxysulfate, at least one calcium compound, and optionally water, where the molar ratio Ca:Al is in the range from 0.002 to 0.5 and the sprayed-concrete accelerator or, where it is a solid sprayed-concrete accelerator, a mixture of the solid sprayed-concrete accelerator in water has a pH of below 4.

13. Use of a sprayed-concrete accelerator according to Claim 12 as accelerator for cement suspensions, sprayed concrete or sprayed mortar, particularly as accelerator in a wet spraying process.

14. Method for producing a sprayed-concrete accelerator according to any one of Claims 1 to 11, comprising the mixing of at least one aluminium compound selected from an aluminium sulfate and/or an aluminium hydroxysulfate and aluminous cement, and optionally calcium carbonate in solid form, to give a solids mixture, and the addition of the solids mixture to water which optionally comprises dissolved and/or dispersed calcium carbonate, to give an aqueous mixture, more particularly an aqueous solution or suspension.

## Revendications

1. Procédé de fabrication d'un accélérateur de béton projeté à partir d'un mélange a), comprenant le mélange de :
a) au moins un composé d'aluminium choisi parmi un sulfate d'aluminium et/ou un hydroxysulfate d'aluminium, au moins un composé de calcium et éventuellement de l'eau,
le rapport molaire Ca:Al dans le mélange a) se situant dans la plage allant de 0,002 à 0,5, et l'accélérateur de béton projeté ou, s'il s'agit d'un accélérateur de béton projeté solide, un mélange de l'accélérateur de béton projeté solide dans de l'eau, présentant un pH de moins de 4.

2. Procédé selon la revendication 1, dans lequel ledit au moins un composé de calcium du mélange a) est au moins un composé de calcium choisi parmi l'oxyde de calcium, l'hydroxyde de calcium, le carbonate de calcium, le nitrate de calcium et un ciment, notamment le ciment Portland et/ou le ciment mixte Portland, et/ou n'est pas un ciment alumineux.

3. Procédé selon la revendication 1 ou la revendication 2, dans lequel le rapport molaire Ca:Al dans le mélange a) se situe dans la plage allant de 0,01 à 0,5, et de préférence de 0,05 à 0,5.

4. Procédé selon l'une quelconque des revendications 1 à 3, dans lequel, dans le mélange a),
ledit au moins un composé d'aluminium choisi parmi le sulfate d'aluminium et l'hydroxysulfate d'aluminium est dissous et/ou suspendu dans de l'eau, et ledit au moins un composé de calcium est ajouté sous forme solide, ou ledit au moins un composé d'aluminium choisi parmi le sulfate d'aluminium et l'hydroxysulfate d'aluminium, et ledit au moins un composé de calcium, de préférence un composé de calcium basique, sont mélangés sous forme solide, et le mélange de solides obtenu est ajouté à de l'eau, ou
ledit au moins un composé d'aluminium choisi parmi le sulfate d'aluminium et l'hydroxysulfate d'aluminium, et au moins un composé de calcium basique et éventuellement du carbonate de calcium sont mélangés sous forme solide, et le mélange de solides obtenu est ajouté à de l'eau, qui contient éventuellement du carbonate de calcium dissous et/ou suspendu, du carbonate de calcium étant contenu au moins dans un composant choisi parmi le mélange de solides et l'eau, ou
le composé de calcium est tout d'abord dissous et/ou suspendu dans de l'eau, puis du sulfate d'aluminium et/ou de l'hydroxysulfate d'aluminium sont ajoutés sous la forme d'une poudre ou sous la forme d'une solution ou suspension aqueuse.

5. Procédé selon l'une quelconque des revendications 1 à 4, dans lequel au moins une partie du sulfate de calcium formé dans le mélange a) est séparée, et/ou au moins une partie de l'eau ajoutée dans le mélange a) est de nouveau éliminée.

6. Procédé selon l'une quelconque des revendications 1 à 5, dans lequel l'accélérateur de béton projeté ou, s'il s'agit d'un accélérateur de béton projeté solide, un mélange de l'accélérateur de béton projeté solide dans de l'eau présente un pH dans la plage allant de 2 à moins de 4.

7. Procédé selon l'une quelconque des revendications 1 à 6, dans lequel l'accélérateur de béton projeté se présente sous la forme d'une poudre, d'une solution aqueuse ou d'une suspension aqueuse, une solution ou suspension aqueuse étant préférée.

8. Procédé selon la revendication 7, dans lequel l'accélérateur de béton projeté est une suspension aqueuse qui contient de la jurbanite.

9. Procédé selon l'une quelconque des revendications 1 à 8, dans lequel le rapport molaire entre l'aluminium et le (sulfate-calcium), mol_{Al}/ (mol_{SO4}-mol_{Ca}), dans le mélange a) se situe dans la plage allant de 0,66 à 2,2 ou de 2/3 à 2,2, notamment de plus de 2/3, de préférence dans la plage allant de 0,67 à 1,9, de manière davantage préférée de 0,68 à 1,6, de manière encore davantage préférée de 0,69 à 1,3, de manière encore davantage préférée de 0,7 à 1, de manière encore davantage préférée de 0,71 à 0,9, et de manière particulièrement préférée dans la plage allant de 0,72 à 0,8.

10. Procédé selon l'une quelconque des revendications 1 à 9, dans lequel un ou plusieurs additifs sont en outre ajoutés au mélange a), un additif pouvant p. ex. être au moins un aluminate alcalin.

11. Procédé selon l'une quelconque des revendications 1 à 10, dans lequel, par rapport au poids total des composants de départ, y compris l'eau de cristallisation éventuellement contenue dans ceux-ci, mais sans l'eau éventuellement ajoutée,
lors de la fabrication du mélange a), de 50 à 99,95 % en poids, de préférence de 80 à 99,5 % en poids, de sulfate d'aluminium et/ou d'hydroxysulfate d'aluminium, et de 0,05 à 50 % en poids, de préférence de 0,2 à 20 % en poids, d'au moins un composé de calcium sont ajoutés,
un ou plusieurs additifs pouvant en outre être ajoutés au mélange a).

12. Accélérateur de béton projeté pouvant être obtenu par un procédé selon l'une quelconque des revendications 1 à 11 à partir d'un mélange a) contenant au moins un composé d'aluminium choisi parmi un sulfate d'aluminium et/ou un hydroxysulfate d'aluminium, au moins un composé de calcium et éventuellement de l'eau, le rapport molaire Ca:Al se situant dans la plage allant de 0,002 à 0,5, et l'accélérateur de béton projeté ou, s'il s'agit d'un accélérateur de béton projeté solide, un mélange de l'accélérateur de béton projeté solide dans de l'eau, présentant un pH de moins de 4.

13. Utilisation d'un accélérateur de béton projeté selon la revendication 12 en tant qu'accélérateur pour des suspensions de ciment, du béton projeté ou du mortier projeté, notamment en tant qu'accélérateur dans le procédé de projection par voie humide.

14. Procédé de fabrication d'un accélérateur de béton projeté selon l'une quelconque des revendications 1 à 11, comprenant le mélange d'au moins un composé d'aluminium choisi parmi un sulfate d'aluminium et/ou un hydroxysulfate d'aluminium, et d'un ciment alumineux et éventuellement de carbonate de calcium sous forme solide, afin d'obtenir un mélange de solides, et l'ajout du mélange de solides à de l'eau, qui contient éventuellement du carbonate de calcium dissous et/ou dispersé, afin d'obtenir un mélange aqueux, notamment une solution ou suspension aqueuse.
